**Europäisches Patentamt**

**European Patent Office**

**Office européen des brevets**

(11) Veröffentlichungsnummer: **0 118 598**
**A2**

(12) # EUROPÄISCHE PATENTANMELDUNG

(21) Anmeldenummer: **83111206.5**

(22) Anmeldetag: **10.11.83**

(51) Int. Cl.³: **H 01 M 2/10**
**H 01 M 2/02**

(30) Priorität: **24.11.82 DE 8232905 U**

(43) Veröffentlichungstag der Anmeldung:
**19.09.84 Patentblatt 84/38**

(84) Benannte Vertragsstaaten:
**AT DE FR GB IT SE**

(71) Anmelder: **Accumulatorenfabrik Sonnenschein GmbH**
**Thiergarten Postfach 1180**
**D-6470 Büdingen 1(DE)**

(72) Erfinder: **Holland, Gunther**
**Mühlstrasse 48**
**D-6470 Büdingen 2(DE)**

(72) Erfinder: **Müller, Hans**
**Neuer Weg 7**
**D-6470 Büdingen 4(DE)**

(74) Vertreter: **Baumann, Eduard, Dipl.-Phys.**
**Postfach 1201 Sattlerstrasse 1**
**D-8011 Höhenkirchen/München(DE)**

(54) **Einsetzteil für ein Schubfach.**

(57) Die Erfindung bezieht sich auf ein Einsetzteil (1) für ein Schubfach, insbesondere ein im Batteriefach elektrischer Geräte einsetzbares Batteriegehäuse oder einen Akkumulator.

Um einen festen Halt des Einsetzteiles im Schubfach auch beim Transport der zugehörigen elektrischen Geräte zu ermöglichen, sind an Außenwänden (2) des Einsetzteiles Federelemente (3, 4) angeordnet, die im eingesetzten Zustand gegen die Innenwände des Schubfaches drücken. Vorzugsweise sind die Federelemente vollständig in Aussparungen (5, 6) der Außenwände des Einsetzteiles eindrückbar, so daß kein zusätzlicher Raumbedarf besteht.

Fig. 1

EP 0 118 598 A2

Einsetzteil für ein Schubfach.

**0118598**

Die Erfindung bezieht sich auf ein Einsetzteil für ein Schubfach gemäß dem Oberbegriff des Anspruches 1.

Ein besonders wichtiges Einsatzgebiet ist das Batteriegehäuse, das in ein Batteriefach eingesetzt, im allgemeinen eingeschoben wird. Im Batteriegehäuse sind die Gerätebatterien vorgesehen, welche über entsprechende, im Batteriefach vorgesehene Kontakte die Gerätespannung liefern. Häufig sind dabei die Batterien fest im Batteriegehäuse eingesetzt, und die Batteriegehäuse sind im wesentlichen vollständig verschlossen und werden in diesem Zustand in das Batteriefach eingeschoben und verriegelt. Häufig setzt man in entsprechende Batteriefächer auch einsatzfertige elektrochemische Akkumulatoren unmittelbar ein, und nicht bloß die Einzelbatterien enthaltenden Batteriegehäuse. Auf diese Weise kann Volumen und Gewicht gespart werden, das beispielsweise für eine höhere Batteriekapazität verwendet werden kann.

Zwangsläufig müssen die Batteriefächer mit einer bestimmten Toleranz hergestellt werden. Aus diesem Grunde wackeln jedoch die Batteriegehäuse innerhalb der Batteriefächer, was nicht nur zu Scheppergeräuschen während des Tragens derartiger elektrischer Geräte in Folge des Anstoßens der relativ harten Außenwände des Batteriegehäuses mit den Innenwänden des Batteriefaches führt, sondern aufgrund der damit verbundenen Verschiebungen auch zu Defekten sowie insbesondere zu Beeinträchtigungen des elektrischen Kontaktes führen kann. Dies kann insbesondere bei wichtigen, hochwertigen elektronischen Geräten, wie Videorecorder, zu nicht akzeptablen Geräteausfällen führen. Bei marktüblichen Geräten sind daher in den meisten Fällen Klemmfedern, im allgemeinen in Form von Draht-Spiralfedern, vorgesehen, die einen festen Sitz der einzulegenden Batterien, Akkumulatoren oder Batteriegehäuse gewährleisten sollen. Derartige Klemmfedern müssen jedoch auf eine ganz bestimmte Batterieform und -größe ausgelegt werden. Es ist daher nicht möglich, Stromquellen unterschiedlicher Form oder Größe einzusetzen. Darüberhinaus ist die Herstellung eigener Klemmfedern sowie deren Montage umständlich und zeitaufwendig. Außerdem beanspruchen diese Klemmfedern ebenfalls ein eigenes Volumen.

Der Erfindung liegt die Aufgabe zugrunde, ein Einsetzteil gemäß dem Oberbegriff des Anspruches 1 so auszubilden, daß ein sicherer federnder Halt in einem Schubfach auch beim Transport der zugehörigen elektrischen Geräte gewährleistet ist, ohne daß innerhalb des Schubfaches irgendwelche Klemmvorrichtungen erforderlich wären.

Die Aufgabe wird erfindungsgemäß durch die Merkmale des Kennzeichens des Anspruches 1 gelöst. Weitere Ausbildungen der Erfindung sind in den Unteransprüchen dargestellt.

Das Grundprinzip der Erfindung besteht darin, an den Außenwänden des Einsetzteiles Federelemente anzuordnen, welche gegen die Innenwände des Schubfaches drücken. Eine zweckmäßige Ausführung besteht darin, die Federelemente an Aussparungen des Einsetzteiles so anzuordnen, daß sie lediglich an zwei gegenüberliegenden Seiten mit dem Rand der Aussparung verbunden sind. Das nach außen vorgewölbte Mittelteil der Federelemente kann dann im eingesetzten Zustand des Einsetzteiles gegen die entsprechende Innenwand des Schubfaches drücken und soweit in die Aussparung hineingeschoben werden, bis eine ebene Linie mit der Außenwand des Einsetzteiles besteht, ohne daß die Federkraft der Federelemente beeinträchtigt wäre.

Besonders einfach, zweckmäßig und wirkungsvoll ist es, die Federelemente einstückig mit dem Einsetzteil auszubilden, sei es in einem einzigen Herstellungsvorgang, oder sei es durch nachträgliche Auswölbung des Mittelteiles der Federelemente nach außen.

In einem bevorzugten praktischen Ausführungsbeispiel, bei dem das Einsetzteil räumlich identisch ist mit dem stromliefernden Akkumulator, der relativ lang, jedoch verhältnismäßig schmal ist und eine gewisse Tiefe aufweist, setzt man in einem verhältnismäßig großen Abstand zwei einzelne Federelemente an einer Außenseite des Akkumulators, beim horizontalen Einschieben in eine entsprechende Öffnung vorzugsweise an der Oberseite des Akkumulators, ein. Beim Einschieben des Akkumulators in das im wesentlichen ohne zusätzliche Toleranz bemessene Batteriefach werden die beiden Federelemente zwangsläufig durch die Aussparungen hindurch nach innen gedrückt.

Zu diesem Zwecke muß selbstverständlich innerhalb dieser Außenseite des Akkumulators ein gewisser freier Raum vorgesehen sein, der vorzugsweise nach innen durch einen zweiten gas und flüssigkeitsdichten Deckel abgeschlossen ist. Die nach innen eingedrückten Federelemente stehen unter Spannung gegenüber dem Batteriefach und halten den Akkumulator vibrationsfrei in jeder Lage fest. In üblicher Weise kann sodann das Batteriefach durch einen Batteriefachdeckel nach außen verriegelt werden, obwohl dies nicht unbedingt erforderlich wäre..

Da die Federelemente vollständig in die Außenwände des Einsetzteiles eindrückbar sind, ist es nicht einmal erforderlich, die räumlichen Abmessungen bisheriger Konstruktionen von Batteriefächern irgendwie zu ändern. Die verwendeten Federelemente benötigen nämlich überhaupt keinen Zusatzplatz.

Ein bevorzugtes Ausführungsbeispiel der Erfindung ist in der Zeichnung dargestellt. Es zeigt:

Figur 1
eine perspektivische Darstellung eines Einsatzteiles in Form eines kompletten Akkumulators mit zwei Federelementen,

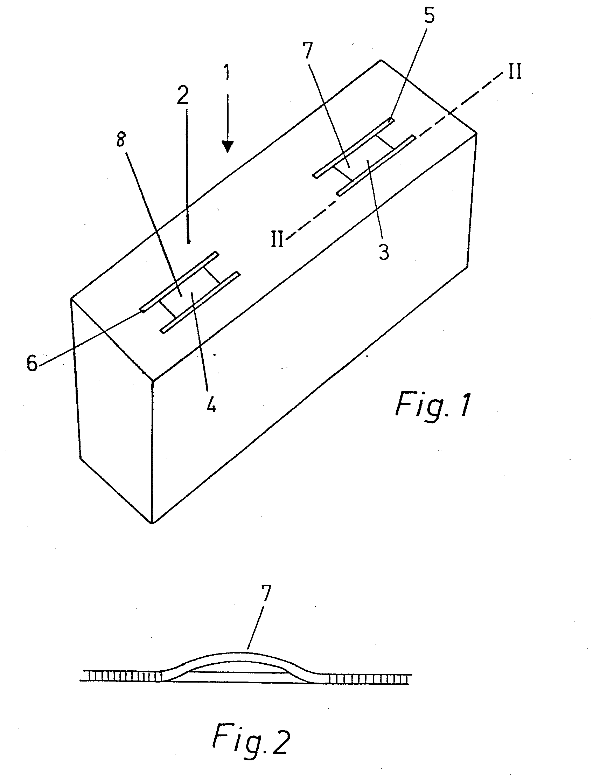

Figur 2
einen Längschnitt entlang der Linie II-II von Figur 1.

In der Zeichnung ist der Akkumulator allgemein mit 1 bezeichnet. Die Außenseite, welche die beiden Federelemente 3 und 4 aufweist, ist mit 2 bezeichnet. Das Wesen der Federelemente besteht aus nach außen gewölbten Brücken 7 bzw. 8, welche infolge von zwei seitlichen spaltförmigen Öffnungen 5 bzw. 6 lediglich in der Mitte mit der Außenseite 2 einstückig in Verbindung stehen.

Der in Figur 2 gezeigte Schnitt längs der Linie II-II von Figur 1 zeigt die Form der Wölbung der Brücke 7 sowie die einstückige Ausbildung mit der Außenseite 2.

# Patentbüro
# EDUARD BAUMANN

**0118598**

Diplom-Physiker
Deutscher Patentanwalt
European Patent Attorney

Patentbüro Eduard Baumann Postfach 1201 D-8011 Höhenkirchen/München

Accumulatorenfabrik

Sonnenschein GmbH

Thiergarten

D-6470 Büdingen (Hess.) 1

Sattlerstraße 1
D-8011 Höhenkirchen/München, Germany
Telefon 08102/4108
Teletex 262 –810 280 baupat
Telex 17 810 280 baupat
(Achtung. Noch Textdurchgabe 4mal „+"-Taste drücken!)
(Attention. After finishing your text push down 4 times the "+" key!)

Postscheckamt München · Kto.-Nr. 196648-804 (BLZ 700 100 80)
Raiffeisenbank Höhenkirchen · Kto.-Nr. 32000 (BLZ 701 694 02)

Datum,
Date,

Uns. Zeich,
Our ref,  Sonnen 156 EU

Ihr Zeich,
Your ref,

## Schutzansprüche

1. Einsetzteil (1) für ein Schubfach, insbesondere ein im Batteriefach elektrischer Geräte einsetzbares Batteriegehäuse oder einen Akkumulator, gekennzeichnet durch an den Außenwänden (2) des Einsetzteiles (1) angeordnete, nach außen vorstehende und im eingesetzten Zustand gegen die Innenwände des Schubfaches drückende Federelemente (3, 4).

2. Einsetzteil nach Anspruch 1, dadurch gekennzeichnet, daß die Federelemente (3, 4) an Aussparungen (5, 6) des Einsetzteiles (1) angeordnet und lediglich an zwei gegenüberliegenden Seiten mit dem Rand der Aussparung (5, 6) verbunden sind, wobei der nach außen vorgewölbte Mittelteil (7, 8) der Federelemente (3, 4) vorzugsweise vollständig in die Aussparung (5, 6) eindrückbar ist.

3. Einsetzteil nach Anspruch 2, dadurch gekennzeichnet, daß die mit dem Rand der Aussparung (5, 6) verbundenen Federelemente (3, 4) einstückig mit den betreffenden Außenwänden (2) bzw. dem gesamten Einsetzteil (1) ausgebildet und vorzugsweise durch entsprechende Formgebung in einem einzigen Herstellungsschritt durch Spritzguß hergestellt sind.

4. Einsetzteil nach einem der Ansprüche 1 - 3, dadurch gekennzeichnet, daß zwei Federelemente (3, 4) an einer an die Einsatzöffnung angrenzenden Außenwand (2) des Einsetzteiles (1) in einem Abstand angeordnet sind und im eingesetzten Zustand des Einsetzteiles (1) durch die anliegende Innenwand des Schubfaches im wesentlichen vollständig in die zugehörigen Aussparungen (5, 6) nach innen gedrückt werden.

5. Einsetzteil nach einem der Ansprüche 1 - 4, dadurch gekennzeichnet, daß als Werkstoff für das Einsetzteil und die vorzugsweise einstückig damit ausgebildeten Federelemente (3, 4) ein schweißfähiger und zähelastischer Kunststoff, vorzugsweise ein kautschukmodifiziertes Acrylnitril-Butadien-Styrol-Copolymerisat, eingesetzt wird.

0118598

*Fig. 1*

*Fig.2*